(19) Europäisches Patentamt
European Patent Office
Office européen des brevets

(11) **EP 2 362 655 B1**

(12) **EUROPEAN PATENT SPECIFICATION**

(45) Date of publication and mention
of the grant of the patent:
**17.07.2013 Bulletin 2013/29**

(51) Int Cl.:
***H04N 7/26*** *(2006.01)*

(21) Application number: **10153225.7**

(22) Date of filing: **10.02.2010**

(54) **Motion-vector estimation**

Bewegungsvektorschätzung

Estimation du vecteur de mouvement

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**31.08.2011 Bulletin 2011/35**

(73) Proprietor: **Telefonaktiebolaget L M Ericsson
(Publ)
164 83 Stockholm (SE)**

(72) Inventor: **Sanbao, Xu
226 48 Lund (SE)**

(74) Representative: **Åkerman, Mårten Lennart et al
Ericsson AB
Patent Unit Lund
221 83 Lund (SE)**

(56) References cited:
**WO-A1-2005/006767**

• SUH J W ET AL: "FAST SUB-PIXEL MOTION
ESTIMATION TECHNIQUES HAVING LOWER
COMPUTATIONAL COMPLEXITY" IEEE
TRANSACTIONS ON CONSUMER
ELECTRONICS, IEEE SERVICE CENTER, NEW
YORK, NY, US LNKD- DOI:10.1109/TCE.
2004.1341708, vol. 50, no. 3, 1 August 2004
(2004-08-01), pages 968-973, XP001225109 ISSN:
0098-3063
• HILL P R ET AL: "Interpolation Free Subpixel
Accuracy Motion Estimation" IEEE
TRANSACTIONS ON CIRCUITS AND SYSTEMS
FOR VIDEO TECHNOLOGY, IEEE SERVICE
CENTER, PISCATAWAY, NJ, US LNKD- DOI:
10.1109/TCSVT.2006.885722, vol. 16, no. 12, 1
December 2006 (2006-12-01), pages 1519-1526,
XP011151050 ISSN: 1051-8215

## Description

## Technical Field

The present invention relates to motion-vector estimation with sub-pixel resolution for encoding a sequence of image frames.

## Background

Video encoding can be utilized to reduce the size (e.g. measured in bytes) of a sequence of image frames. Normally, video encoding is performed by applying a two-dimensional (2D) discrete cosine transform (DCT) on data representing a current image frame (or a portion thereof, such as a macroblock of 16 by 16 pixels). The resulting DCT-values are then quantized for reducing the size of the encoded image frame. Redundancy due to similarities between consecutive image frames may be utilized for further reducing the size by only encoding the difference between the current image frame and a reference frame. The size of the encoded image frame may be even further reduced by employing so called motion compensation. In motion compensation, an estimate is made of how much a portion (such as a macroblock of 16 by 16 pixels) of the current image frame is displaced in relation to a corresponding ("most similar") portion of the reference frame. The data that is subject to encoding is then the difference between said portion of the current image frame and said corresponding portion of the reference frame. The displacement is represented with a so called motion vector. In order to obtain relatively high performance video encoding, motion vectors with sub-pixel resolution, such as half-pixel and/or quarter-pixel resolution, may be employed in accordance with some video-encoding standards, e.g. H.263, H.264, MPEG-2, and MPEG-4. A straightforward solution for estimating motion vectors with sub-pixel resolution is to interpolate the image data of an image frame to determine image data at positions ("sub-pixel positions") in between integer pixel positions, such as at half-pixel and quarter-pixel positions, and estimate the motion vectors based on the interpolated image data. A problem with this is that the computational complexity associated with the interpolation is normally relatively high, e.g. since the number of sub-pixel positions, for which image data needs to be interpolated, is normally relatively large. This, in turn, may result in relatively hard requirements on the hardware that performs the video encoding, e.g. in terms of processing speed, memory bandwidth, power-consumption, etc. Hence, a reduction of the computational complexity associated with the estimation of motion vectors with sub-pixel resolution would be desirable.

A solution where interpolation of image data can be avoided is proposed in the article P.R. Hill et al., "Interpolation free subpixel accuracy motion estimation," IEEE Transactions on Circuits and Systems for Video Technology, Dec 2006, vol. 16, no. 12, pp.1519-1526 (in the following referred to as "Hill"). Instead of interpolating the image data, a parabolic function is used to estimate a cost function that represents the sum of absolute differences (SAD) between a block (macroblock or segmented macroblock) of a current frame and a reference block of the reference frame as a function of a displacement between the block of the current frame and the reference block of the reference frame.

## Summary

An object of the present invention is to provide estimation of motion vectors with sub-pixel resolution without requiring interpolation of image data.

According to a first aspect, there is provided a method of generating a motion vector with sub-pixel resolution associated with a first portion of a first image frame in a sequence of image frames for encoding the sequence of image frames. An error surface represents a difference between image data of the first portion of the first image frame and image data of a second portion of a second image frame, displaced with a displacement vector in relation to the first portion, and is a function of the displacement vector. Furthermore, the motion vector is an estimate of a displacement vector that minimizes the value of the error surface. The method comprises obtaining a coarse motion vector, which is an estimate of the motion vector with integer-pixel resolution. Furthermore, the method comprises approximating the error surface in a neighborhood of the coarse motion vector with a biquartic polynomial, and representing terms of the biquartic polynomial with orthogonal polynomials. Moreover, the method comprises generating the motion vector by searching for a displacement vector that minimizes said biquartic polynomial.

The method may further comprise generating coefficients of the biquartic polynomial from known values of the error surface for the coarse motion vector and for a number of neighboring displacement vectors with integer-pixel resolution. The number of coefficients may e.g. be 9 and the number of neighboring displacement vectors may e.g. be 8. Generating the coefficients may comprises multiplying a vector having said known values of the error surface with a pre-generated matrix.

The orthogonal polynomials may be Chebyshev polynomials of the first kind. For example, the biquartic polynomial, denoted $b(x, y)$, may be on the form

$$b(x,y) = a_0 T_{4,0}(x,y) + a_1 T_{0,4}(x,y) + a_2 T_{3,1}(x,y) + a_3 T_{1,3}(x,y) + a_4 T_{2,2}(x,y)$$

$$+ a_5 T_{2,1}(x,y) + a_6 T_{1,2}(x,y) + a_7 T_{3,0}(x,y) + a_8 T_{0,3}(x,y)$$

wherein $a_i$ denotes the coefficients of the biquartic polynomial, $x$ and $y$ are the component-wise differences between the displacement vector and the coarse motion vector in a first and a second direction, respectively, and $T_{n,m}(x,y) = T_n(x) T_m(y)$, wherein $T_n(x)$ and $T_m(y)$ denote one-dimensional Chebyshev polynomials of the first kind of order $n$ and $m$, respectively.

Alternatively, the orthogonal polynomials may e.g. be Legendre polynomials, Laguerre polynomials, Hermite polynomials, or Chebyshev polynomials of the second kind.

Searching for the displacement vector that minimizes said biquartic polynomial may comprise executing a two-dimensional gradient descent algorithm. The two-dimensional gradient descent algorithm may employ variable step size and sub-pixel resolution.

Alternatively, searching for the displacement vector that minimizes said biquartic polynomial may comprise executing a Newton algorithm or a conjugate gradient algorithm.

According to a second aspect, there is provided an electronic apparatus for encoding a sequence of image frames. The electronic apparatus comprises a control unit adapted to perform the method according to the first aspect. The electronic apparatus may further comprise an image sensor for generating the sequence of image frames. The electronic apparatus may e.g. be, but is not limited to, a mobile phone, a digital camera, a web camera, a video camera, or a camcorder.

According to a third aspect, there is provided a computer program product comprising computer program code means for executing the method according to the first aspect when said computer program code means are run by a programmable control unit.

According to a fourth aspect, there is provided a computer readable medium having stored thereon a computer program product comprising computer program code means for executing the method according to the first aspect when said computer program code means are run by a programmable control unit.

Further embodiments of the invention are defined in the dependent claims.

It should be emphasized that the term "comprises/comprising" when used in this specification is taken to specify the presence of stated features, integers, steps, or components, but does not preclude the presence or addition of one or more other features, integers, steps, components, or groups thereof.

## Brief Description of the Drawings

Further objects, features and advantages of embodiments of the invention will appear from the following detailed description, reference being made to the accompanying drawings, in which:

Fig. 1 schematically illustrates a first and a second image frame and displacement vectors between a portion of the first image frame and portions of the second image frame;
Fig. 2 schematically illustrates a coordinate system with integer-pixel and half-pixel coordinates;
Figs. 3-4 are flowcharts for methods according to embodiments of the present invention;
Fig. 5 is a simplified block diagram of an electronic apparatus according to an embodiment of the present invention; and
Fig. 6 schematically illustrates a computer-readable medium and a programmable control unit according to an embodiment of the present invention.

## Detailed Description

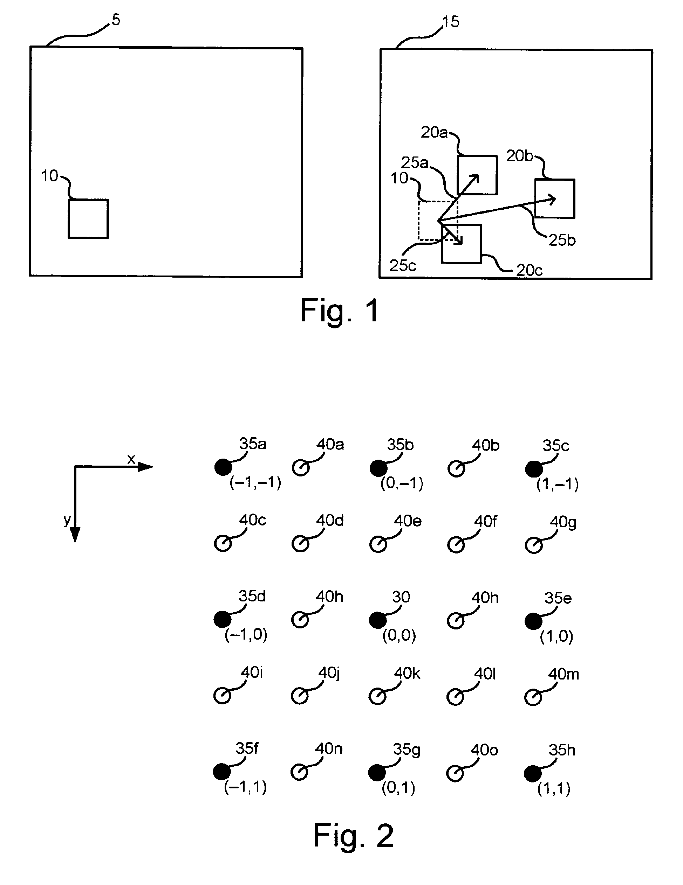

Fig. 1 schematically illustrates a first image frame 5 and a second image frame 15. In embodiments and examples described below, the first image frame 5 is a current image frame to be encoded. Typically, image frames are divided into portions, each comprising a number of pixels, wherein said portions are encoded individually. Such a portion may e.g. be a macroblock of e.g. 16x16 pixels, but the invention is not limited thereto. A first such portion 10 of the first image frame 5 is indicated in Fig. 1. Furthermore, the second image frame 15 is a reference image frame that can be utilized for efficient compression when encoding the first image frame. For example, when encoding the first portion 10 (or any other portion) of the first image frame 5, the data that is actually encoded may be the difference between the image data (e.g. RGB (Red Green Blue) data or luminance and chrominance data) of said first portion 10 and corresponding image data of a corresponding reference portion of the second image frame 15. The reference portion should, qualitatively speaking, be selected such that the difference in image data between the first portion 10 of the first image frame and reference portion is as small as possible.

Fig 1 also schematically illustrates a number of portions 20a-c of the second image frame 15. All of the portions 20a-c could be candidates for selections as the reference portion. Furthermore, Fig. 1 illustrates displacement vectors 25a-c between (the location of) the first portion 10 in the first image frame 5 and (the locations of) the portions 20a-c of the second image frame 15. The displacement vector between the first portion 10 and the portion of the second image frame 15 that is selected as said reference portion is referred to as the motion vector. The problem of selecting an appropriate reference portion of the second image frame is equivalent to the problem of determining an appropriate motion vector.

Quantitatively, the difference between the image data of the first portion 10 of the first image frame 5 and any portion of the second image frame 15 may be measured by any suitable metric. Normally, the sum of absolute differences (SAD) is used as a metric, but other metrics, such as but not limited to the sum of squared differences, may be used as well. The basic principles of video encoding and motion vectors are well known in the art and are not further described in any detail herein.

The metric used for measuring said difference defines an error surface, which is a function of the displacement vector. The value of the error surface for a given displacement vector may be equal to the metric of the difference between the image data of the first portion 10 of the first image frame and the image data of a second portion of the second image frame 15, which is displaced with the displacement vector in relation to the first portion 10. More generally speaking, the error surface represents a difference between image data of the first portion 10 of the first image frame 5 and the image data of a second portion of a second image frame 15, displaced with the displacement vector in relation to the first portion 10. The error surface is sometimes referred to as the residue of prediction.

Ideally, the motion vector is determined as the displacement vector that minimizes the error surface. However, e.g. due to a limited resolution in the representation of the displacement vectors, it is in general not possible to find the displacement vector that exactly minimizes the error surface. Instead, the motion vector is an estimate of a displacement vector that minimizes the error surface.

Since the image data of the first image frame 5 and the second image frame 15 is known at integer pixel positions, the values of the error surface for displacement vectors with integer-pixel resolution can be calculated in a straightforward manner. However, when seeking to determine motion vectors with sub-pixel resolution, this is not sufficient; also values of the error surface for at least some displacement vectors with sub-pixel resolution are needed. As indicated in the background section, this has traditionally been accomplished by interpolating the image data of the image frames to determine image data at sub-pixel positions, e.g. half-pixel and quarter-pixel positions, from which values of the error surface can be determined for displacement vectors with sub-pixel resolution. As is also indicated in the background section, it was suggested in Hill to approximate the SAD, which is an example of an error surface, with a parabolic (or biquadratic) function in order to avoid the need for interpolation of image data. However, in accordance with embodiments of the present invention, the inventor has realized that the biquadratic approximation of the error surface has a too low polynomial order to be able to represent the error surface, which for many video sequences may be relatively complex, accurately enough for successful determination of motion vectors with sub-pixel resolution. In fact, the inventor has realized that the accuracy may in many cases be insufficient even if the polynomial order is increased to a bicubic approximation. The inventor has deduced that a biquartic approximation of the error surface is better suited than a biquadratic or bicubic approximation for the purpose of determining a motion vector with sub-pixel resolution. A general biquartic polynomial $B(x, y)$ in the variables $x$ and $y$ is given by:

$$B(x, y) = \sum_{j=0}^{4} \sum_{k=0}^{4-j} c_{j,k} x^j y^k$$

$$(Eq. 1)$$

where $c_{j,k}$ are free (i.e. independent) coefficients of the general biquartic polynomial.

According to embodiments of the present invention, there is provided a method of generating a motion vector with sub-pixel resolution associated with the first portion 10 of the first image frame 5 for encoding the sequence of image frames. Note that said first image frame 5 may be any image frame of a sequence of image frames. Hence, the method is not limited to a particular image frame, but may be applied to any image frame(s) of said sequence. Furthermore, note that said first portion 10 may be any portion of the first image frame 5. Hence, the method is not limited to a particular portion, but may be applied to any portion(s) of any image frame.

The method comprises obtaining a coarse motion vector. The coarse motion vector is an estimate, with integer-pixel resolution, of the motion vector. The coarse motion vector may e.g. have been generated using any known (or future) method of determining a motion vector with integer-pixel resolution. According to some embodiments, obtaining the coarse motion vector includes generating the coarse motion vector. According to other embodiments, the coarse motion vector may have been generated outside the method, e.g. in another process. Obtaining the coarse motion vector may include obtaining the coarse motion vector from that other process. The coarse motion vector may e.g. be the one of the displacement vectors with integer-pixel resolution that results in the smallest value of the error surface. A search for a suitable displacement vector with sub-pixel resolution that can be used as the motion vector can then be performed in a neighborhood of the coarse motion vector, as described in more detail below. For that purpose, the error surface is, in accordance with embodiments of the method, approximated with a biquartic polynomial in said neighborhood of the coarse motion vector.

Fig. 2 schematically illustrates a coordinate system that is used for the biquartic polynomial in embodiments and examples in the following. Axes for an *x* direction and a *y* direction are also indicated in Fig. 2. The "unit" for both the *x* axis and the *y* axis is "pixels". A number of points 30 and 35a-h are marked with solid dots. Coordinates for these points 30, 35a-h are also indicated on the form (*x*, *y*). These points 30, 35a-h represent displacement vectors with integer-pixel resolution. The point 30 with the coordinate (0,0) represents the coarse motion vector. The points 35a-h represent the 8 closest neighbors of the coarse motion vector. Hence, the *x* and *y* coordinates of a point in Fig. 2 represents the differences in the *x* and *y* directions, respectively, between the displacement vector represented with that point and the coarse motion vector. In embodiments and examples presented below, it is these *x* and *y* coordinates that are used as arguments, or variables, in the biquartic polynomial. In addition, displacement vectors with half-pixel resolution (i.e. where the each component of the displacement vector is represented with half-pixel resolution) are represented with points 40a-o marked with circles. Each displacement vector corresponds to a unique point in the coordinate system of Fig. 2, and determining a displacement vector that should be used as the motion vector is equivalent to finding the corresponding point in the coordinate system of Fig. 2. For simplicity, only points representing motion vectors with integer-pixel resolution and half-pixel resolution are indicated in Fig. 2. However, embodiments of the present invention are applicable to other resolutions as well, e.g. quarter-pixel resolution (which may e.g. be employed in H.264 and MPEG-4 video codecs) or even finer resolutions.

A problem with the general biquartic polynomial given by Eq. 1 is that it has 15 free coefficients $c_{j,k}$, which in this context is a relatively large number. For example, at least 15 values of the error surface need to bee known in order to determine these 15 coefficients. Hence, in order to determine the 15 coefficients, the values of the error surface need to be evaluated for 15 different displacement vectors with integer-pixel resolution in and/or in proximity of the neighborhood of where the search for the motion vector is to be performed. Values of the error surface for a number of such relevant displacement vectors with integer-pixel resolution may already have been calculated in the process of determining the coarse motion vector. These values can be reused, thereby achieving computational efficiency of the method. However, the number of relevant displacement vectors for which the error surface has already been calculated in the process of determining the coarse motion vector is rarely as many as 15. Hence, additional evaluations of the error surface for a number of displacement vectors with integer-pixel resolution would normally be needed to determine all coefficients if a general biquartic polynomial were to be used, which would add to the computational cost of the method. The inventor has thus realized that it would be desirable to reduce the number of coefficients of the biquartic polynomial that need to be determined. According to embodiments of the method, terms of the biquartic polynomials are therefore represented with orthogonal polynomials, whereby the number of coefficients can be reduced as is exemplified below. In examples and embodiments described below, the orthogonal polynomials are Chebyshev polynomials of the first kind. However, other types of orthogonal polynomials may be used as well, such as but not limited to Legendre polynomials, Laguerre polynomials, Hermite polynomials, or Chebyshev polynomials of the second kind.

Furthermore, embodiments of the method comprise generating the motion vector by searching for a displacement vector that minimizes the biquartic polynomial that is used to approximate the error surface. Note that, in general, it may be practically impossible to find the displacement vector that exactly minimizes the biquartic polynomial. This is e.g. due to that the numerical resolution of the displacement vectors used during the search is limited (even if sub-pixel resolution is used). Hence, the motion vector need not necessarily be the displacement vector that exactly minimizes the biquartic polynomial, but should be a good (e.g. the best) one of those found during the search for the minimum. Suitable search algorithms are discussed below.

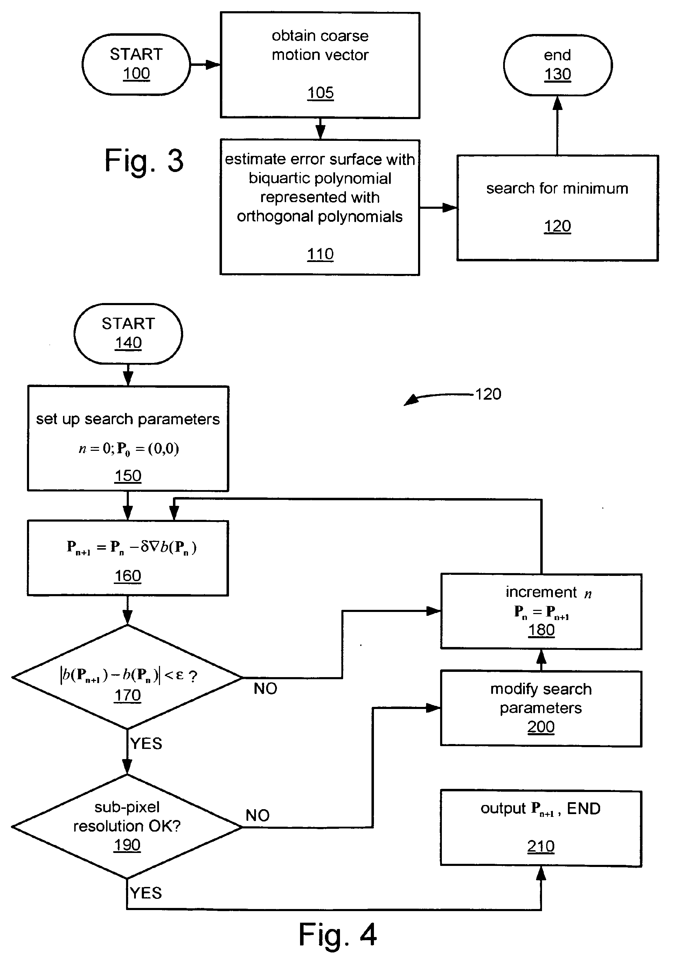

Fig. 3 is a flowchart of an embodiment of the method. The operation of the method is started in step 100. In step 105, the coarse motion vector is obtained. In step 110, the error surface is approximated in a neighborhood of the coarse motion vector with a biquartic polynomial, terms of which are represented with orthogonal polynomials. Step 110 may e.g. comprise determining coefficients of the biquartic polynomial. In step 120, the motion vector is generated by searching for a displacement vector that minimizes the biquartic polynomial.

Some embodiments of the method comprises (e.g. in step 110, Fig. 3) generating coefficients of the biquartic polynomial from values of the error surface for the coarse motion vector and for a number of neighboring displacement vectors with integer-pixel resolution. As mentioned above, the number of relevant (i.e. relevant for determination of coefficients of the biquartic polynomial) displacement vectors with integer-pixel resolution for which the values of the error surface have already been calculated is rarely as many as 15. However, for many known algorithms of determining a motion vector with integer-pixel precision that are suitable for determining the coarse motion vector, it can be expected that the error surface has been evaluated at least for the coarse motion vector and its eight nearest neighbors, i.e. for the displacement vectors represented with the points 30 (coarse motion vector) and 35a-h (eight nearest neighbors). Therefore, according to some embodiments of the method, the coefficients of the biquartic polynomial are generated based on the values of the error surface for the coarse motion vector and its 8 neighboring displacement vectors with integer-pixel resolution. The use of a total of 9 known values of the error surface allows for the generation of coefficients of a biquartic polynomial with up to 9 free coefficients. According to an embodiment, which is used as an example throughout the rest of this specification, the biquartic polynomial, denoted $b(x, y)$, is on the form:

$$b(x,y) = a_0 T_{4,0}(x,y) + a_1 T_{0,4}(x,y) + a_2 T_{3,1}(x,y) + a_3 T_{1,3}(x,y) + a_4 T_{2,2}(x,y)$$
$$+a_5 T_{2,1}(x,y) + a_6 T_{1,2}(x,y) + a_7 T_{3,0}(x,y) + a_8 T_{0,3}(x,y)$$

$$(\text{Eq. 2})$$

wherein $a_j$, $j = 0,1, \ldots ,8$, denotes the 9 free coefficients of the biquartic polynomial. The variables $x$ and $y$ are the component-wise differences between the displacement vector and the coarse motion vector in a first and a second direction, respectively, as described with reference to Fig. 2 above. The expressions $T_{n,m}(x, y)$ denote two-dimensional Chebyshev polynomials of the first kind determined by

$$T_{n,m}(x,y) = T_n(x)T_m(y)$$

$$(\text{Eq. 3})$$

wherein $T_n(x)$ and $T_m(y)$ denote one-dimensional Chebyshev polynomials of the first kind of order n and m, respectively. Such a one-dimensional polynomial of the first kind is given by

$$T_n(x) = \cos(n \arccos(x))$$

$$(\text{Eq. 4})$$

The biquartic polynomial $b(x, y)$ given by Eq. 2 can be rewritten on the same form as the general biquartic polynomial $B(x, y)$ given by Eq. 1, i.e. with 15 terms on the form $c_{j,k}\, x^j\, y^k$. A difference from the general biquartic polynomial $B(x, y)$ is that, in this case, only 9 of the coefficients are free, whereas the other 6 are dependent on the 9 free coefficients. Hence, some degrees of freedom are lost compared with a general biquartic polynomial. However, since the biquartic polynomial given by Eq. 2 involves all combinations of $x^j\, y^k$ present in the general biquartic polynomial $B(x, y)$ of Eq. 1, it is still in a better position to accurately approximate the error surface than a biquadratic or bicubic polynomial.

The values of the biquartic polynomial $b(x, y)$ for the points 30 and 35a-h (Fig. 2) can be expressed on a matrix form given by

$$\begin{bmatrix} b(-1,1) \\ b(-1,0) \\ b(-1,1) \\ b(0,-1) \\ b(0,0) \\ b(0,1) \\ b(1,-1) \\ b(1,0) \\ b(1,1) \end{bmatrix} = A \begin{bmatrix} a_0 \\ a_1 \\ a_2 \\ a_3 \\ a_4 \\ a_5 \\ a_6 \\ a_6 \\ a_8 \end{bmatrix}$$

(Eq. 5)

where A is a 9x9 matrix, the components of which are given by Eq. 2. Setting a condition that $b\,(x,\,y)$ should be equal to the error surface (in the following denoted $e\,(x,\,y)$) that it approximates for the points 30 and 35a-h (Fig. 2), the coefficients $a_0$ - $a_8$ can be determined from

$$\begin{bmatrix} a_0 \\ a_1 \\ a_2 \\ a_3 \\ a_4 \\ a_5 \\ a_6 \\ a_7 \\ a_8 \end{bmatrix} = A^{-1} \begin{bmatrix} e(-1,1) \\ e(-1,0) \\ e(-1,1) \\ e(0,-1) \\ e(0,0) \\ e(0,1) \\ e(1,-1) \\ e(1,0) \\ e(1,1) \end{bmatrix}$$

(Eq. 6)

The elements of A, and consequently those of its inverse $A^{-1}$, are constant and given by the values of the expressions $T_{n,m}\,(x,\,y)$ in Eq. 8 for the points 30 and 35a-h (Fig. 2). These values are constants, and therefore $A^{-1}$ can be pre-generated. Hence, no matrix generation or inversion "on the fly" for generating $A^{-1}$ is required for determining the coefficients $a_0$ - $a_8$, which is an advantage for keeping the computational cost of the method relatively low. In embodiments using other numbers of coefficients than 9 and/or other types of orthogonal polynomials than Chebyshev polynomials of the first kind, the coefficients of the biquartic polynomial can also be determined by multiplying a vector with known values of the error surface $e\,(x,\,y)$ with a pre-generated matrix in a similar way (but with a different pre-generated matrix). Hence, in accordance with embodiments of the method, generating the coefficients of the biquartic polynomial may comprise multiplying a vector with known values of the error surface with a pre-generated matrix.

The search for the minimum of the biquartic polynomial (e.g. step 120 in Fig. 3) for determining the motion vector with sub-pixel resolution can e.g. be performed by executing a two-dimensional gradient descent algorithm according to embodiments of the method. Fig. 4 is a flow chart of step 120 for such an embodiment. In the following, n is an iteration index, $P_n = (x_n, y_n)$ denotes a point in the coordinate system illustrated in Fig. 2 associated with the iteration index n, $\delta$ is a step size, $\nabla b(P_n)$ is the gradient of the biquartic polynomial $b(x,\,y)$ at the point $P_n$, and $\in$ is a threshold. The embodiment of the two-dimensional gradient descent algorithm illustrated in Fig. 4 employs a variable step size $\delta$ and a variable sub-pixel resolution. The search may be started with a relatively coarse sub-pixel resolution (e.g. half-pixel resolution), and finer resolutions (e.g. quarter-pixel resolution, and possibly even finer depending on the desired final sub-pixel resolution) are used as the algorithm closes in on the minimum of the biquartic polynomial. At the same time as the sub-pixel resolution is changed to a finer resolution, the step size $\delta$ is also decreased. In other embodiments, a fixed sub-pixel resolution and/or a fixed step size $\delta$ may be used, e.g. corresponding to the sub-pixel resolution and/or step size $\delta$, respectively, used in the end of the embodiment with variable sub-pixel resolution and step size $\delta$ illustrated

in Fig. 4. However, using a fixed sub-pixel resolution and/or a fixed step size $\delta$ may result in a slower search, since unnecessarily fine resolution and/or unnecessarily small steps may thereby be used in the beginning of the search.

According to the embodiment illustrated in Fig. 4, the operation of step 120 is started in step 140. In step 150, the iteration index n is set to 0, the starting point $P_n$ (i.e. $P_0$) is set to (0,0), and initial search parameters are set up. The search parameters include the step size $\delta$, the sub-pixel resolution, and the threshold $\in$. In step 160, a new candidate point $P_{n+1} = P_n - \delta\overline{V}b(P_n)$ is generated. In step 170, it is checked whether the absolute value of the difference $b(P_{n+1})$ - $b(P_n)$ is less than the threshold $\in$. If not, the iteration index $n$ is incremented in step 180, and the operation returns to step 160 where a new iteration is commenced. Due to the increment of n, the point $P_{n+1}$ of the previous iteration becomes the starting point $P_n$ of the new iteration. According to some embodiments, one variable is used for representing (i.e. storing the value of) $P_n$ in every iteration, and another variable is used for representing $P_{n+1}$ in every iteration. In these embodiments, step 180 includes assigning the value of $P_{n+1}$ to the variable used for representing $P_n$, as indicated in Fig. 4 with the assignment operation $P_n = P_{n+1}$ in step 180.

On the other hand, if it is concluded in step 170 that the absolute value of the difference $b$ $(P_{n+1})$ - $b(P_n)$ is less than the threshold $\in$, the operation proceeds to step 190. In step 190, it is checked whether the sub-pixel resolution used in the iteration meets the sub-pixel resolution requirement (e.g., if the motion vector should be generated with quarter-pixel resolution, was quarter-pixel resolution used in the iteration?). If not, the operation proceeds to step 200, where search parameters are modified, or refined. Step 200 may comprise setting a finer sub-pixel resolution. Furthermore, step 200 may comprises decreasing the step size $\delta$. The operation then proceeds to step 180 described above.

On the other hand, if it is concluded in step 190 that the sub-pixel resolution used in the iteration in fact meets the sub-pixel resolution requirement, the operation proceeds to step 210. In step 210, the point $P_{n+1}$ is output from the gradient-descent algorithm and the operation of step 120 is ended (the motion vector can be generated by adding the $x$ coordinate $x_{n+1}$ and the $y$ coordinate $y_{n+1}$ of the point $P_{n+1}$ to the $x$ component and $y$ component, respectively, of the coarse motion vector). Suitable values of the sub-pixel resolution and step-size $\delta$ for use in different stages of the search may e.g. be empirically determined. For example, an embodiment of the method may be applied to one or more "typical" video sequences, and the values of the sub-pixel resolution and step size $\delta$ may be adjusted until an average time (or other suitable measure, such as average number of iterations) for the search is e.g. minimized or below an acceptable level. As a rule of thumbs, the inventor has realized that a suitable value of the step size $\delta$ may be a factor 2 smaller than the sub-pixel resolution. For example, for a sub-pixel resolution of 1/2 (i.e. half-pixel resolution), a step size $\delta$ of 1/4 may be suitable, for a sub-pixel resolution of 1/4 (i.e. quarter-pixel resolution), a step size $\delta$ of 1/8 may be suitable, etc.

In accordance with some embodiments, also the threshold $\in$ may be varied in step 200. For example, at the same time as the sub-pixel resolution is changed to a finer resolution, the threshold $\in$ may also be decreased. Suitable values of $\in$ for use in different stages of the search may e.g. be empirically determined in a similar way as indicated above for the sub-pixel resolution and step size $\delta$.

The above-mentioned gradient-descent algorithm is only an example of search algorithms that can be used when searching for the minimum of the biquartic polynomial. For example, the search for the minimum of the biquartic polynomial for determining the motion vector with sub-pixel resolution can e.g. be performed by executing a Newton algorithm or a conjugate gradient algorithm.

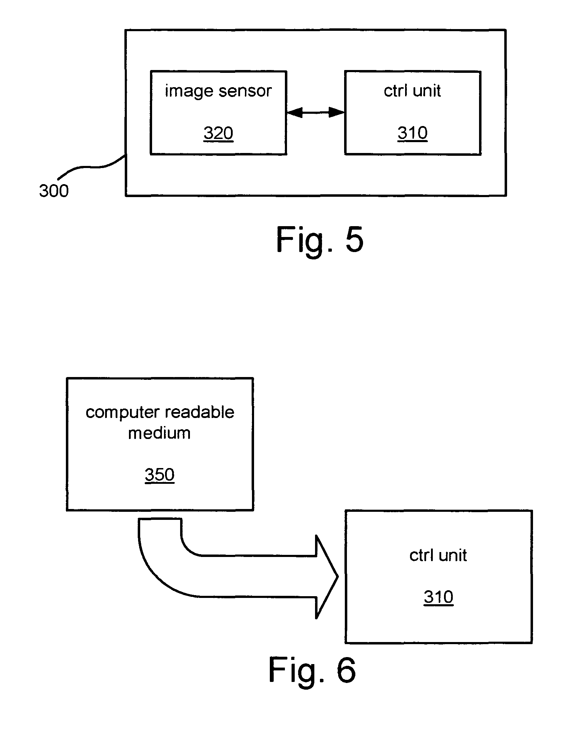

According to some embodiments of the present invention, there is provided an electronic apparatus 300 for encoding a sequence of image frames. An embodiment of the electronic apparatus 300 is schematically illustrated in Fig. 5. According to the embodiment, the electronic apparatus comprises a control unit 310 adapted to perform the method according to any of the embodiments described above.

Hence, the control unit 310 may be adapted to determine the coarse motion vector as described above with reference to embodiments of the method. Furthermore, the control unit 310 may be adapted to approximate the error surface in a neighborhood of the estimate of the coarse motion vector with a biquartic polynomial, and represent terms of the biquartic polynomial with orthogonal polynomials as described above with reference to embodiments of the method. Moreover, the control unit 310 may be adapted to generate the motion vector by searching for a displacement vector that minimizes the biquartic polynomial as described above with reference to embodiments of the method.

The control unit 310 may be adapted to generate coefficients of the biquartic polynomial from known values of the error surface for the coarse motion vector and for a number of neighboring displacement vectors with integer-pixel resolution as described above with reference to embodiments of the method. As a non-limiting example, as described above with reference to embodiments of the method, the number of coefficients may be 9 and the number of neighboring displacement vectors may be 8.

The control unit may e.g. be adapted to generate the coefficients by multiplying a vector having said known values of the error surface with a pre-generated matrix, as described above with reference to embodiments of the method.

As described above with reference to embodiments of the method, the orthogonal polynomials utilized by the control unit 310 for representing terms of the biquartic polynomial may be Chebyshev polynomials of the first kind. For example, the biquartic polynomial may be on the form given by Eq. 2. However, other types of orthogonal polynomials, such as Legendre polynomials, Laguerre polynomials, Hermite polynomials, or Chebyshev polynomials of the second kind, may also be utilized by the control unit 310 for representing terms of the biquartic polynomial.

The control unit 310 may further be adapted to search for the displacement vector that minimizes the biquartic polynomial by executing a two-dimensional gradient descent algorithm, e.g. as described above with reference to Fig. 4. However, according to some embodiments, the control unit 310 may be adapted to search for the displacement vector that minimizes the biquartic polynomial by executing some other kind of search algorithm, such as but not limited to a Newton algorithm or a conjugate gradient algorithm.

As illustrated in Fig. 5, the electronic apparatus 300 may further comprise an image sensor 320 (or "camera") for generating the sequence of image frames. The electronic apparatus 300 may e.g. be, but is not limited to, any of a mobile phone, a digital camera, a web camera, a video camera, and a camcorder.

The control unit 310 (Fig. 5) may be implemented as an application-specific hardware unit. Alternatively, the control unit 310, or parts thereof, may be implemented using one or more configurable or programmable hardware units, such as but not limited to one or more field-programmable gate arrays (FPGAs), processors, or microcontrollers. Hence, the control unit 310 may be a programmable control unit 310. Embodiments of the present invention may thus be embedded in a computer program product, which enables implementation of the method and functions described herein, e.g. the embodiments of the method described above. Therefore, according to embodiments of the present invention, there is provided a computer program product, comprising instructions arranged to cause the control unit 310 to perform the steps of any of the embodiments of the method described above. The computer program product may comprise program code which is stored on a computer readable medium 350, as illustrated in Fig. 6, which can be loaded and executed by the control unit 310 to cause it to perform the steps of any of the embodiments of the method described above.

The present invention has been described above with reference to specific embodiments. However, other embodiments than the above described are possible within the scope of the invention. Different method steps than those described above, performing the method by hardware or software, may be provided within the scope of the invention. The different features and steps of the embodiments may be combined in other combinations than those described. The scope of the invention is only limited by the appended patent claims.

**Claims**

1. A method of generating a motion vector with sub-pixel resolution associated with a first portion (10) of a first image frame (5) in a sequence of image frames for encoding the sequence of image frames, wherein

   - an error surface represents a difference between image data of the first portion (10) of the first image frame (5) and image data of a second portion (20a-c) of a second image frame (15), displaced with a displacement vector (25a-c) in relation to the first portion (10), and is a function of the displacement vector (25a-c);
   - the motion vector is an estimate of a displacement vector (25a-c) that minimizes the value of the error surface; and

   the method comprises:

   - obtaining a coarse motion vector, which is an estimate of the motion vector with integer-pixel resolution;
   - approximating the error surface in a neighborhood of the coarse motion vector with a biquartic polynomial;
   - representing the terms of the biquartic polynomial with a set of orthogonal polynomials containing less than 15 orthogonal polynomials in total, from which all 15 terms of the general biquartic polynomial form

   $$B(x, y) = \sum_{j=0}^{4} \sum_{k=0}^{4-j} c_{j,k} x^j y^k$$ are derivable; and

   - generating the motion vector by searching for a displacement vector (25a-c) that minimizes said biquartic polynomial.

2. The method according to claim 1, comprising generating coefficients of the biquartic polynomial from known values of the error surface for the coarse motion vector and for a number of neighboring displacement vectors with integer-pixel resolution.

3. The method according to claim 2, wherein the number of coefficients is 9 and the number of neighboring displacement vectors is 8.

4. The method according to claim 2 or 3, wherein generating the coefficients comprises multiplying a vector having said known values of the error surface with a pre-generated matrix.

5. The method according to any preceding claim, wherein the orthogonal polynomials are Chebyshev polynomials of the first kind.

6. The method according to claim 5, wherein the biquartic polynomial, denoted $b(x, y)$, is on the form

$$b(x,y) = a_0 T_{4,0}(x,y) + a_1 T_{0,4}(x,y) + a_2 T_{3,1}(x,y) + a_3 T_{1,3}(x,y) + a_4 T_{2,2}(x,y)$$
$$+ a_5 T_{2,1}(x,y) + a_6 T_{1,2}(x,y) + a_7 T_{3,0}(x,y) + a_8 T_{0,3}(x,y)$$

wherein $a_j$ denotes the coefficients of the biquartic polynomial, $x$ and $y$ are the component-wise differences between the displacement vector and the coarse motion vector in a first and a second direction, respectively, and $T_{n,m}(x,y)$ = $T_n(x)T_m(y)$, wherein $T_n(x)$ and $T_m(y)$ denote one-dimensional Chebyshev polynomials of the first kind of order n and m, respectively.

7. The method according to any of the claims 1 - 4, wherein the orthogonal polynomials are Legendre polynomials, Laguerre polynomials, Hermite polynomials, or Chebyshev polynomials of the second kind.

8. The method according to any preceding claim, wherein searching for the displacement vector (25a-c) that minimizes said biquartic polynomial comprises executing a two-dimensional gradient descent algorithm.

9. The method according to claim 8, wherein the two-dimensional gradient descent algorithm employs variable step size and sub-pixel resolution.

10. The method according to any of the claims 1-7, wherein searching for the displacement vector (25a-c) that minimizes said biquartic polynomial comprises executing a Newton algorithm or a conjugate gradient algorithm.

11. An electronic apparatus (300) for encoding a sequence of image frames comprising a control unit (310) adapted to perform the method according to any preceding claim.

12. The electronic apparatus (300) according to claim 11, further comprising an image sensor (320) for generating the sequence of image frames.

13. The electronic apparatus (300) according to claim 11 or 12, wherein the electronic apparatus is a mobile phone, digital camera, web camera, video camera, or camcorder.

14. A computer program product comprising computer program code means for executing the method according to any of the claims 1 - 10 when said computer program code means are run by a programmable control unit (310).

15. A computer readable medium (350) having stored thereon a computer program product comprising computer program code means for executing the method according to any of the claims 1 - 10 when said computer program code means are run by a programmable control unit (310).

**Patentansprüche**

1. Verfahren zur Erzeugung eines Bewegungsvektors mit Teilpixelauflösung, der mit einem ersten Abschnitt (10) eines ersten Einzelbildes (5) in einer Folge von Einzelbildern assoziiert ist, zum Codieren einer Folge von Einzelbildern, wobei

- eine Fehlerfläche eine Differenz zwischen Bilddaten des ersten Abschnitts (10) des ersten Einzelbildes (5) und Bilddaten eines zweiten Abschnitts (20a-c) eines zweiten Einzelbildes (15), der mit einem Verschiebungsvektor (25a-c) in Bezug auf den ersten Abschnitt (10) verschoben ist, darstellt und vom Verschiebungsvektor (25a-c) abhängt;

- der Bewegungsvektor eine Schätzung eines Verschiebungsvektors (25a-c) ist, der den Wert der Fehlerfläche minimiert; und

das Verfahren umfasst:

- Erhalten eines groben Bewegungsvektors, welcher eine Schätzung des Bewegungsvektors mit Vollpixelauflösung ist;
- Annähern der Fehlerfläche in einer Nachbarschaft des groben Bewegungsvektors mit einem biquartischen Polynom;
- Darstellen der Ausdrücke des biquartischen Polynoms mit einem Satz von orthogonalen Polynomen, der insgesamt weniger als 15 orthogonale Polynome enthält, von welchen alle 15 Ausdrücke der allgemeinen biquartischen Polynomform $B(x,y) = \sum_{j=0}^{4} \sum_{k=0}^{4-j} c_{j,k} x^j y^k$ abgeleitet werden können; und
- Erzeugen des Bewegungsvektors durch Suchen nach einem Verschiebungsvektor (25a-c), der das biquartische Polynom minimiert.

2. Verfahren nach Anspruch 1, umfassend ein Erzeugen von Koeffizienten des biquartischen Polynoms aus bekannten Werten der Fehlerfläche für den groben Bewegungsvektor und für eine Anzahl von benachbarten Verschiebungsvektoren mit Vollpixelauflösung.

3. Verfahren nach Anspruch 2, wobei die Anzahl von Koeffizienten 9 beträgt, und die Anzahl von benachbarten Verschiebungsvektoren 8 beträgt.

4. Verfahren nach Anspruch 2 oder 3, wobei das Erzeugen der Koeffizienten ein Multiplizieren eines Vektors mit den bekannten Werten der ersten Fehlerfläche mit einer im Voraus erzeugten Matrix umfasst.

5. Verfahren nach einem der vorgehenden Ansprüche, wobei die orthogonalen Polynome Chebyshev-Polynome erster Art sind.

6. Verfahren nach Anspruch 5, wobei das biquartische Polynom, bezeichnet als b(x, y), in der folgenden Form ist:

$$b(x, y) = a_0 T_{4,0}(x, y) + a_1 T_{0,4}(x, y) + a_2 T_{3,1}(x, y) + a_3 T_{1,3}(x, y) + a_4 T_{2,2}(x, y) + a_5 T_{2,1}(x, y) + a_6 T_{1,2}(x, y) + a_7 T_{3,0}(x, y) + a_8 T_{0,3}(x, y)$$

wobei $a_j$ die Koeffizienten des biquartischen Polynoms bezeichnet, x und y die komponentenweisen Differenzen zwischen dem Verschiebungsvektor und dem groben Bewegungsvektor in einer ersten bzw. zweiten Richtung sind, und $T_{n,m}(x\ y) = T_n(x)T_m(y)$, wobei $T_n(x)$ und $T_m(y)$ eindimensionale Chebyshev-Polynome erster Art der Ordnung n bzw. m bezeichnen.

7. Verfahren nach einem der Ansprüche 1 bis 4, wobei die orthogonalen Polynome Legendre-Polynome, Laguerre-Polynome, Hermite-Polynome oder Chebyshev-Polynome zweiter Art sind.

8. Verfahren nach einem der vorhergehenden Ansprüche, wobei das Suchen nach dem Verschiebungsvektor (25a-c), der das biquartische Polynom minimiert, ein Ausführen eines zweidimensionalen Gradientenabstiegsalgorithmus umfasst.

9. Verfahren nach Anspruch 8, wobei der zweidimensionale Gradientenabstiegsalgorithmus eine veränderliche Schrittgröße und Teilpixelauflösung einsetzt.

10. Verfahren nach einem der Ansprüche 1 bis 7, wobei das Suchen nach dem Verschiebungsvektor (25a-c), der das biquartische Polynom minimiert, ein Ausführen eines Newton-Algorithmus oder eines konjugierten Gradientenalgorithmus umfasst.

**11.** Elektronische Vorrichtung (300) zum Codieren einer Folge von Einzelbildern, umfassend eine Steuereinheit (310), die zum Ausführen des Verfahrens nach einem der vorhergehenden Ansprüche ausgelegt ist.

**12.** Elektronische Vorrichtung (300) nach Anspruch 11, ferner umfassend einen Bildsensor (320) zum Erzeugen der Folge von Einzelbildern.

**13.** Elektronische Vorrichtung (300) nach Anspruch 11, wobei die elektronische Vorrichtung ein Mobiltelefon, eine Digitalkamera, eine Webkamera, eine Videokamera oder ein Camcorder ist.

**14.** Computerprogrammprodukt, umfassend Computerprogrammcodemittel zum Ausführen des Verfahrens nach einem der Ansprüche 1 bis 10, wenn die Computerprogrammcodemittel durch eine programmierbare Steuereinheit (310) ausgeführt werden.

**15.** Computerlesbares Medium (350), das ein Computerprogrammprodukt darauf gespeichert aufweist, das Computerprogrammcodemittel zum Ausführen des Verfahrens nach einem der Ansprüche 1 bis 10 umfasst, wenn die Computerprogrammcodemittel durch eine programmierbare Steuereinheit (310) ausgeführt werden.

**Revendications**

**1.** Procédé de génération d'un vecteur de mouvement avec résolution de sous-pixel associé à une première portion (10) d'une première trame d'image (5) dans une séquence de trames d'image pour coder la séquence de trames d'image, dans lequel

- une surface d'erreur représente une différence entre des données d'image de la première portion (10) de la première trame d'image (5) et des données d'image d'une seconde portion (20a-c) d'une seconde trame d'image (15), déplacée avec un vecteur de déplacement (25a-c) en relation avec la première portion (10), et est une fonction du vecteur de déplacement (25z-c) ;
- le vecteur de mouvement est une estimation d'un vecteur de déplacement (25a-c) qui minimise la valeur de la surface d'erreur ; et

le procédé comprend de :

- obtenir un vecteur de mouvement brut, qui est une estimation du vecteur de mouvement avec résolution de pixel entier ;
- calculer approximativement la surface d'erreur dans un voisinage du vecteur de mouvement brut avec un polynôme biquartique ;
- représenter les termes du polynôme biquartique avec un jeu de polynômes orthogonaux contenant moins de 15 polynômes orthogonaux au total, desquels tous les 15 termes peuvent être déduits de la formule de polynôme

biquartique général $B(x, y) = \sum_{j=0}^{4} \sum_{k=0}^{4-j} c_{j,k} x^j y^k$ ; ; et

- générer le vecteur de mouvement en recherchant un vecteur de déplacement (25a-c) qui minimise ledit polynôme biquartique.

**2.** Procédé selon la revendication 1, comprenant de générer des coefficients de du polynôme biquartique d'après les valeurs connues de la surface d'erreur pour le vecteur de mouvement brut et pour une pluralité de vecteurs de déplacement avec résolution de pixel entier.

**3.** Procédé selon la revendication 2, dans lequel le nombre de coefficients est 9 et le nombre de vecteurs de déplacement voisins est 8.

**4.** Procédé selon les revendications 2 ou 3, dans lequel la génération des coefficients comprend de multiplier un vecteur ayant lesdites valeurs connues de la surface d'erreur par une matrice pré-générée.

**5.** Procédé selon une quelconque des revendications précédentes, dans lequel les polynômes orthogonaux sont des polynômes de Chebyshev du premier type.

6. Procédé selon la revendication 5, dans lequel le polynôme biquartique, dénoté b(x,y), est sous la formule

$$b(x,y) = a_0 T_{4,0}(x,y) + a_1 T_{0,4}(x,y) + a_2 T_{3,1}(x,y) + a_3 T_{1,3}(x,y) + a_4 T_{2,2}(x,y)$$
$$+ a_5 T_{2,1}(x,y) + a_6 T_{1,2}(x,y) + a_7 T_{3,0}(x,y) + a_8 T_{0,3}(x,y)$$

dans lequel $a_j$ dénote les coefficients du polynôme biquartique, x et y sont les différences par composant entre le vecteur de déplacement et le vecteur de mouvement brut dans une première et une seconde direction, respectivement, et $T_{n,m}(x,y) = T_n(x)T_m(y)$, dans lequel $T_n(x)$ et $T_m(y)$ dénotent des polynômes de Chebyshev unidimensionnels du premier type d'ordre n et m, respectivement.

7. Procédé selon une quelconque des revendications 1 à 4, dans lequel les polynômes orthogonaux sont des polynômes de Legendre, des polynômes de Laguerre, des polynômes d'Hermite ou des polynômes de Chebyshev du second type.

8. Procédé selon une quelconque des revendications précédentes, dans lequel la recherche du vecteur de déplacement (25a-c) qui minimise ledit polynôme biquartique comprend d'exécuter un algorithme de descente à gradients bidimensionnel.

9. Procédé selon la revendication 8, dans lequel l'algorithme de descente à gradients bidimensionnel emploie une taille de pas et une résolution de sous-pixel variables.

10. Procédé une quelconque des revendications 1 à 7, dans lequel la recherche du vecteur de déplacement (25a-c) qui minimise ledit polynôme biquartique comprend d'exécuter un algorithme de Newton ou un algorithme à gradient conjugué.

11. Dispositif électronique (300) de codage d'une séquence de trames d'image comprenant une unité de commande (310) adaptée afin de mettre en oeuvre le procédé selon une quelconque des revendications précédentes.

12. Dispositif électronique (300) selon la revendication 11, comprenant en outre un capteur d'image (320) pour générer la séquence de trames d'image.

13. Dispositif électronique (300) selon les revendications 11 ou 12, dans lequel le dispositif électronique est un téléphone mobile, une caméra numérique, une caméra numérique sur le web, une caméra vidéo ou un caméscope.

14. Produit de programme informatique comprenant des moyens de code de programme informatique pour mettre en oeuvre le procédé selon une quelconque des revendications 1 à 10 quand lesdits moyens de code de programme informatique sont exécutés par une unité de commande programmable (310).

15. Support lisible par ordinateur (350) sur lequel est mémorisé un produit de programme informatique comprenant des moyens de code de programme informatique pour mettre en oeuvre le procédé selon une quelconque des revendications 1 à 10 quand lesdits moyens de code de programme informatique sont exécutés par une unité de commande programmable (310).

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P.R. HILL et al.** Interpolation free subpixel accuracy motion estimation. *IEEE Transactions on Circuits and Systems for Video Technology,* December 2006, vol. 16 (12), 1519-1526